# EUROPÄISCHE PATENTSCHRIFT

(11) **EP 0 990 563 B1**
(45) Veröffentlichungstag und Bekanntmachung des Hinweises auf die Patenterteilung: **16.03.2005**
(21) Anmeldenummer: 99116893.1
(22) Anmeldetag: 07.09.1999
(51) Int. Cl.: B60R 16/02, H02J 7/16

(54) **Verfahren und Schaltungsanordnung zur Fehlererkennung im Bordnetz eines Kraftfahrzeugs**
Method and circuit arrangement for fault recognition in the electrical system of a motor vehicle
Methode et agencement de circuit de détection de pannes dans le système éléctrique d'un véhicule automobile

(30) Priorität: 02.10.1998 DE 19845561
(43) Veröffentlichungstag der Anmeldung: 05.04.2000
(73) Patentinhaber: Volkswagen Aktiengesellschaft, 38436 Wolfsburg (DE)
(72) Erfinder: Dierker, Uwe, Dipl.-Ing., 38550 Isenbüttel (DE); Michels, Karsten, Dipl.-Ing., 38126 Braunschweig (DE)
(74) Vertreter: Effert, Bressel und Kollegen

(56) Entgegenhaltungen:
- US-A- 4 314 193
- US-A- 4 315 205
- US-A- 4 623 833
- US-A- 5 672 955
- US-A- 5 719 488

## Beschreibung

Die Erfindung betrifft ein Verfahren zur Fehlererkennung im Bordnetz eines Kraftfahrzeugs gemäß der Gattung des Anspruchs 1 sowie eine Schaltungsanordnung zur Durchführung des Verfahrens.

Ein derartiges Verfahren bzw. Schaltungsanordnung ist aus dem Dokument US-4,623,833 bekannt.

Es sind, weiterhin Verfahren bekannt, mit denen Störungen bei elektrischen Verbrauchern in einem Kraftfahrzeug festgestellt werden können. Ein solches Verfahren beschreibt die DE 44 34 616 A1, bei dem mit einem Fahrzeugdatenerfassungsgerät die beim Ein- und Ausschalten eines Verbrauchers auftretenden Spannungsänderungen im Bordnetz aufgezeichnet werden. Auf diese Weise erhält man zu jedem Verbraucher charakteristische Spannungsverläufe für den Ein- und Ausschaltvorgang. Weichen die zu einem bestimmten Verbraucher gehörenden Spannungsverläufe von früher aufgezeichneten Spannungsverläufen ab, so kann daraus auf eine Störung geschlossen und ein entsprechendes Fehlererkennungssignal abgegeben werden.

Bei einem aus der DE 43 38 462 A1 bekannten Kontrollsystem für elektrische Verbraucher in Kraftfahrzeugen wird mittels eines Mikrorechners die an einem Verbraucher gemessene Spannung in Abhängigkeit von der Art und dem Betriebszustand des Verbrauchers ausgewertet. Der Verbraucher wird zu diesem Zweck mit einem Teststrom über eine Meßleitung beaufschlagt.

Die beiden bekannten Verfahren zur Feststellung von Störungen an Verbrauchern in einem Kraftfahrzeug erfordern spezielle und verhältnismäßig aufwendige Meßeinrichtungen, um die gemessenen Signalverläufe korrekt auswerten zu können.

Der Erfindung liegt die Aufgabe zugrunde, ein Verfahren zur Fehlererkennung im Bordnetz eines Kraftfahrzeugs zu schaffen, das mit einfachen Mitteln eine Fehlererkennung im Zusammenhang mit der Bordnetzspannung und dem Generator-Lastsignal ermöglicht.

Die Lösung dieser Aufgabe erhält man mit den im Anspruch 1 angegebenen Merkmalen.

In einem Bordnetz eines Kraftfahrzeugs wird die Bordnetzspannung in Abhängigkeit von der Reglertemperatur und/oder der Batterietemperatur auf eine Sollspannung geregelt. Je nach Belastung des Bordnetzes und je nach Ladezustand der Fahrzeugbatterie wird der Generator mit einem höheren oder einem niedrigeren Auslastungsgrad betrieben. Der Auslastungsgrad des Generators wird im Bordnetz durch das sogenannte DF-Signal angegeben. Gemäß dem erfindungsgemäßen Verfahren wird unter Verwendung des DF-Signals durch einen Vergleich von Sollspannung und gemessener Bordnetzspannung eine Fehlererkennung vorgenommen, wenn festgestellt wird, daß sich die Bordnetzspannung außerhalb eines zulässigen Wertebereichs befindet. Liegt beispielsweise die Bordnetzspannung unterhalb der Sollspannung, während gleichzeitig das DF-Signal einen Teillastbetrieb für den Generator anzeigt, so kann daraus eine Fehleranzeige abgeleitet werden. Schließlich müßte im Falle einer gegenüber der Sollspannung zu niedrigen Bordnetzspannung der Generator mit Vollast betrieben werden, um die Bordnetzspannung möglichst weit an die Sollspannung heranzuführen. Komplizierte Meßeinrichtungen sind für die Durchführung des bevorzugten Verfahrens, bei dem bei Unterspannung des Bordnetzes in Verbindung mit dem DF-Signal eine Fehlererkennung erfolgt, nicht erforderlich.

Der Erfindung liegt weiterhin die Aufgabe zugrunde, eine Schaltungsanordnung zur Durchführung des Verfahrens anzugeben, die mit möglichst geringem Zusatzaufwand im Bordnetz eines Kraftfahrzeugs realisierbar ist.

Die Lösung dieser Aufgabe erhält man mit den im Anspruch 3 aufgeführten Merkmalen.

Eine Fehlererkennungseinrichtung erhält eingangsseitig das DF-Signal, eine Vergleichsspannung die idealerweise der Sollspannung entspricht, und die Bordnetzspannung, so daß bei einer Spannungsdifferenz zwischen Vergleichsspannung und Bordnetzspannung eine Auswertung des DF-Signals erfolgen kann. Liegt das DF-Signal außerhalb eines vorgegebenen Wertebereichs, so kann dies an einer Fehleranzeige angezeigt werden, wobei bei einer unterhalb der Sollspannung liegenden Bord netzspannung eine Fehleranzeige erfolgt, wenn gleichzeitig des DF-signal einen Teillastbetrieb für den generator anzeigt.

Die Werte oder Wertebereiche, die zu unterschiedlichen Betriebsarten für das DF-Signal und die Bordnetzspannung zulässig sind, können in einem mit der Fehlererkennungseinrichtung verbundenen Speicher abgelegt sein. Der Speicher kann dabei auch Teil der Fehlererkennungseinrichtung oder Teil des Bordnetzsteuergeräts sein. Die Verwendung eines solchen Speichers hat den Vorteil, daß die Fehlererkennungseinrichtung für unterschiedliche Bordnetzsysteme vorbereitet sein kann. Außerdem können in der Fehleranzeige genaue Angaben darüber gemacht werden, wie stark das DF-Signal und/oder die Bordnetzspannung von einem vorgegebenen Wert in Abhängigkeit von unterschiedlichen Betriebszuständen abweicht.

Die Erfindung wird nachfolgend anhand eines in der Zeichnung dargestellten Ausführungsbeispiels näher erläutert.

Es zeigen:
- Figur 1: das Blockschaltbild einer erfindungsgemäßen Schaltungsanordnung und
- Figur 2: den Verlauf der Sollspannung in einem Bordnetz in Abhängigkeit von der Generatortemperatur.

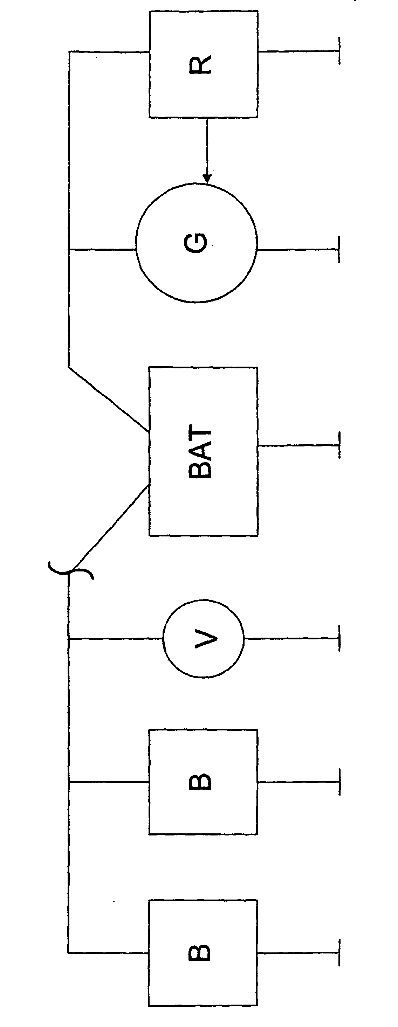

Die in Figur 1 dargestellte Schaltungsanordnung umfaßt ein mit unterbrochenen Linien angedeutetes Bordnetz 1 mit einer Fahrzeugbatterie BAT. Das Bordnetz 1 wird außer von der Fahrzeugbatterie auch von einem Generator 2 gespeist, der von einem Regler 3 gesteuert wird. Der Regler 3 erhält als Eingangssignal die Temperatur T_{B} von Generator oder Batterie und die Bordnetzspannung U. Ausgangsseitig gibt der Regler 3 ein den Auslastungsgrad des Generators 2 kennzeichnendes DF-Signal DF an eine Fehlererkennungseinrichtung 4 ab. An zwei weiteren Eingängen liegt an der Fehlererkennungseinrichtung 4 die Bordnetzspannung U und die Vergleichsspannung Uᵥ für das Bordnetz an. Die Fehlererkennungseinrichtung 4 steht außerdem mit einem Speicher 5 und einer Anzeigeeinheit 6 in Verbindung.

Der Regler 3 gibt in Abhängigkeit von der Reglertemperatur und/oder der Temperatur T_{B} von Generator oder Batterie für die Bordnetzspannung eine Sollspannung U_{S} vor. Die Erregung des Generators 2 wird dabei so lange erhöht, bis die Bordnetzspannung U die geforderte Sollspannung U_{S} erreicht. Der Generator 2 wird dabei maximal bis zu einem Auslastungsgrad von 100 % = Vollast angehoben. Erfordern die an das Bordnetz angeschlossenen elektrischen Verbraucher und der Ladestrom der Fahrzeugbatterie insgesamt einen zu hohen Strombedarf, so kann dies zur Folge haben, daß die Bordnetzspannung U trotz Vollast des Generators 2 nicht auf die Sollspannung U_{S} angehoben werden kann. Das zugehörige korrekte DF-Signal müßte dann 100 % Auslastungsgrad des Generators 2 anzeigen.

Erkennt die Fehlererkennungseinrichtung 4, daß die Bordnetzspannung U unterhalb der Sollspannung Us liegt und daß gleichzeitig das DF-Signal nur einen Teillastbetrieb des Generators 2 anzeigt, so läßt dies auf einen Fehler schließen. Die Fehlererkennungseinrichtung 4 gibt in diesem Fall ein Fehlersignal an die Anzeigeeinrichtung 6, die beispielsweise anzeigt, daß im Bereich der Spannungsmessung und/oder Spannungsregelung ein Fehler vorliegt.

Die an der Anzeigeeinrichtung 6 erfolgte Fehlermeldung kann auf einen Generatordefekt, auf einen Reglerdefekt, auf eine fehlerhafte Spannungsmessung oder beispielsweise auf eine gelockerte Polklemme hinweisen.

In Figur 2 wird der temperaturabhängige Verlauf der Sollspannung U_{S} veranschaulicht, wobei hier eine Abhängigkeit von der Batterietemperatur T_{B} skizziert ist. Mit zunehmender Batterietemperatur T_{B} verringert sich die Sollspannung U_{S}.

### BEZUGSZEICHENLISTE

- 1: Bordnetz
- 2: Generator
- 3: Regler
- 4: Fehlererkennungseinrichtung
- 5: Speicher
- 6: Anzeigeeinheit
- U_{S}: Sollspannung
- T_{B}: Batterietemperatur
- BAT: Fahrzeugbatterie
- Uᵥ: Vergleichsspannung

## Patentansprüche

1. Verfahren zur Fehlererkennung im Bordnetz eines Kraftfahrzeugs, bei dem die Bordnetzspannung (U) von einem Generator in Verbindung mit einer Fahrzeugbatterie (2) bereitgestellt wird, wobei die vom Generator (2) an das Bordnetz (1) angelegte Generatorspannung auf eine Sollspannung (U_{S}) einstellbar ist und ein den jeweiligen Auslastungsgrad des Generators (2) kennzeichnendes DF-Signal (DF) vorliegt, **dadurch gekennzeichnet, daß** bei einer Abweichung zwischen Sollspannung (U_{S}) und gemessener Bordnetzspannung (U) eine Fehlererkennungseinrichtung (5) feststellt, ob das DF-Signal (DF) von einem zugehörenden zulässigen Wert oder Wertebereich abweicht, und daß bei einem außerhalb des zulässigen Werts oder Wertebereichs liegenden DF-Signal (DF) eine Fehleranzeige erfolgt, und daß bei einer unterhalb der Sollspannung (U_{S}) liegenden Bordnetzspannung (U) eine Fehleranzeige erfolgt, wenn gleichzeitig das DF-Signal einen Teillastbetrieb für den Generator (2) anzeigt.

2. Verfahren nach Anspruch 1, **dadurch gekennzeichnet, daß** in Abhängigkeit von der Wertigkeit der Abweichung des DF-Signals von einem dem aktuellen Betriebszustand zugehörenden korrekten Wert oder Wertebereich eine Fehlererkennung erfolgt.

3. Schaltungsanordnung zur Durchführung des Verfahrens nach einem der vorhergehenden Ansprüche, **dadurch gekennzeichnet, daß** eingangsseitg an einer Fehlererkennungseinrichtung (4) die Bordnetzspannung (U), die Vergleichsspannung (Uᵥ) und das DF-Signal (DF) anliegen, und daß die Fehlererkennungseinrichtung (4) das anliegende DF-Signal mit dem zugehörenden Wert oder Wertebereich vergleicht und bei einem außerhalb des zugehörenden Werts oder Wertebereichs liegenden DF-Signal ein Fehlersignal an eine ausgangsseitig angeschlossene Fehleranzeige (6) angibt, und daß bei einer unterhalb der Sollspannung (U_{S}) liegenden Bordnetzspannung (U) eine Fehleranzeige erfolgt, wenn gleichzeitig das DF-Signal einen Teillastbetrieb für den Generator (2) anzeigt.

4. Schaltungsanordnung nach Anspruch 3, **dadurch gekennzeichnet, daß** in einem Speicher (5) zu Spannungsdifferenzwerten, die die möglichen Abweichungen zwischen Vergleichs- und Bordnetzspannung (Uᵥ; U) kennzeichnen, zugehörende Werte und/oder Wertebereiche für das DF-Signal abgespeichert sind.

## Claims

1. Method for fault identification in the on-board electrical system of a motor vehicle, in which the voltage (U) of the on-board electrical system is provided by a generator connected to a vehicle battery (2), it being possible to adjust the generator voltage, which is applied to the on-board electrical system (1) by the generator (2), to a setpoint voltage (Uₛ), and there being a DF signal (DF) which characterizes the respective degree of utilization of the generator (2), **characterized in that**, when there is a difference between the setpoint voltage (Uₛ) and the measured voltage (U) of the on-board electrical system, a fault identification device (5) establishes whether the DF signal (DF) differs from an associated permissible value or range of values, and **in that** a fault is indicated if a DF signal (DF) is outside the permissible value or range of values, and **in that** if a voltage (U) of the on-board electrical system is below the setpoint voltage (Uₛ), a fault is indicated if at the same time the DF signal indicates partial-load operation for the generator (2).

2. Method according to Claim 1, **characterized in that** fault identification is carried out as a function of the size of the difference between the DF signal and a correct value or range of values associated with the current operating state.

3. Circuit arrangement for carrying out the method according to one of the preceding claims, **characterized in that** the voltage (U) of the on-board electrical system, the comparison voltage (Uᵥ) and the DF signal (DF) are present at the input of a fault identification device (4), and **in that** the fault identification device (4) compares the present DF signal with the associated value or range of values and transmits a fault signal to a fault indicator (6) connected to its output if the DF signal is outside the associated value or range of values, and **in that** if a voltage (U) of the on-board electrical system is below the setpoint voltage (Uₛ), a fault is indicated if at the same time the DF signal indicates partial-load operation for the generator (2).

4. Circuit arrangement according to Claim 3, **characterized in that** values and/or ranges of values for the DF signal are stored in a memory (5), these values and/or ranges of values being associated with voltage difference values which characterize the possible differences between the comparison voltage (Uᵥ) and the voltage (U) of the on-board electrical system.

## Revendications

1. Procédé de détection de défaut dans le réseau de bord d'un véhicule automobile, avec lequel la tension du réseau de bord (U) est fournie par un alternateur en liaison avec une batterie de véhicule (2), la tension d'alternateur appliquée par l'alternateur (2) au réseau de bord (1) pouvant être réglée à une tension de consigne (Us) et un signal DF (DF) identifiant le niveau de charge correspondant de l'alternateur (2) étant présent, **caractérisé en ce qu'**en cas de différence entre la tension de consigne (Us) et la tension mesurée du réseau de bord (U), un dispositif de détection de défaut (5) détermine si le signal DF (DF) est différent d'une valeur ou d'une plage de valeurs admissible correspondante, et qu'une indication de défaut a lieu en présence d'un signal DF (DF) qui se trouve en-dehors de la valeur ou de la plage de valeurs admissible, et qu'une indication de défaut a lieu en présence d'une tension de réseau de bord (U) inférieure à la tension de consigne (Us) si au même moment le signal DF indique un fonctionnement en charge partielle de l'alternateur (2).

2. Procédé selon la revendication 1, **caractérisé en ce qu'**une détection de défaut a lieu en fonction de la valence de la différence entre le signal DF et une valeur ou plage de valeurs correcte correspondant à l'état de fonctionnement actuel.

3. Arrangement de circuit destiné à mettre en oeuvre le procédé selon l'une des revendications précédentes, **caractérisé en ce qu'**à l'entrée d'un dispositif de détection de défaut (4) sont appliquées la tension du réseau de bord (U), la tension de comparaison (Uv) et le signal DF (DF) et que le dispositif de détection de défaut (4) compare le signal DF appliqué avec la valeur ou la plage de valeurs correspondante et, si le signal DF se trouve en-dehors de la valeur ou de la plage de valeurs correspondante, délivre à un indicateur de défaut (6) branché à sa sortie et qu'une indication de défaut a lieu en présence d'une tension de réseau de bord (U) inférieure à la tension de consigne (Us) si au même moment le signal DF indique un fonctionnement en charge partielle de l'alternateur (2).

4. Arrangement de circuit selon la revendication 3, **caractérisé en ce que** les valeurs et/ou plages de valeurs correspondantes pour le signal DF sont enregistrées dans une mémoire (5) de valeurs de différence de tension qui identifient les différences possibles entre la tension de comparaison et la tension du réseau de bord (Uv ; U).
